# EUROPEAN PATENT SPECIFICATION

(11) **EP 2 993 401 B1**
(45) Date of publication and mention of the grant of the patent: **06.12.2017**
(21) Application number: 14183267.5
(22) Date of filing: 02.09.2014
(51) Int. Cl.: F23N 1/00, F23N 5/24, F23R 3/28, F02C 9/40

(54) **Method for controlling a gas turbine**
Verfahren zur Steuerung einer Gasturbine
Procédé de commande d'une turbine à gaz

(43) Date of publication of application: 09.03.2016
(73) Proprietor: Ansaldo Energia IP UK Limited, London W1G 9DQ (GB)
(72) Inventor: Guethe, Felix, 4056 Basel (CH); Wind, Torsten, 5705 Hallwil (CH); Zinn, Hanspeter, 5406 Baden-Rütihof (CH); Kleemann, Michael, 5303 Würenlingen (CH)
(74) Representative: Bernotti, Andrea

(56) References cited:
- EP-A1- 2 557 297
- EP-A1- 2 767 697
- US-A1- 2006 174 630
- US-A1- 2011 247 315

## Description

### Technical Field

The present invention relates to the field of thermal power generation, in particular to a method for controlling a gas turbine with an operation concept which comprises fuel reactivity measurements as an integral part.

### Background of the Invention

In recent years, it is prevailing to operate a gas turbine with a wide range of fuels to increase the flexibility of the gas turbine in terms of fuel. In this case, composition of the fuel gas entering a combustor of the gas turbine may be changed due to component fluctuation of the fuel gas supply. It is known that the fuel gas composition can influence the gas turbine's performance in terms of operational margins, safety, emissions, pulsation behavior and the like. In view of keeping the performance of the gas turbine optimized, even protecting the gas turbine from damage, it is necessary to detect the change in fuel gas composition fast enough to take measure for safe and optimized operation. In doing so, it is required to detect a wider fuel spectrum consisting of natural gas components like CH₄, and C₂H₆, CₙH₂ₙ₊₂, synthetic gas components like H₂, CO and inert gas like N₂ and CO₂. Then, operation of the gas turbine may be adjusted through varieties of operation parameters based upon the composition of the fuel gas. The most important operation parameters are the mixing properties (usually summarized by the Wobbe Index, which is a corrected calorific value) and the chemical reactivity (such as ignition time or burning velocity).

One solution to this is an infrared (IR) analyzer used to detect the composition of the fuel gas entering a combustor of a gas turbine as described for example in documents US 7216486 B2, DE 10302487 A1. Some components of the fuel gas, such as CH₄ and C2+ (C2+ sums all species CₙH₂ₙ₊₂ with n>1) may be detected by this way. The usual IR absorption technique is fast (time <<1min), but not well enough absorbing to distinguish between C3 and higher C2+components. In addition, some other components such as H₂ and N₂ commonly exist in the fuel gas that are not sensitive to infrared absorption and may not be detected by the infrared analyzer.

Using a gas chromatograph is another means to detect the composition of the fuel gas. However, gas chromatographs have relatively slow response times (usually several minutes, >15min), thus may not be fast enough for sufficient detection of fast changing compositions.

Coriolis meters are known for accurate mass flow measurements on gas turbine sites quite frequently (time <<1min). Due to their measurement principles the density of the fuel is a quantity, which can be extracted by standard instrumentation. Fuel density measurement is already used for deriving the Wobbe index of the fuel, which is then used for operating the gas turbine as described for example in document US 2011/0247315 A1. The measured energy characteristics are communicated to a control unit in real time.

A density measurement of the gaseous fuel together with a measurement of the caloric value to calculate the Wobbe index in connection with controlling the combustion in a gas turbine is disclosed in EP 1 995 518 A2. The Wobbe index value measured is compared with a predefined Wobbe index value for the gaseous fuel and the temperature of the fuel is regulated in order to reach the predefined Wobbe index value. If the turbine is fed with a mixture of fuel gases, the calorimeters will measure the temperature, the lower caloric value and the relative density of the mixture to determine the Wobbe index of the mixture itself.

According to the known state of the art the Wobbe index and heating value are used to maintain the energy content so that the engine runs at a given load. Other solutions are disclosed in documents EP2767697, US 2006/174630 and EP2557297.

The applicants' combustors, such as EV, AEV or SEV combustors are more sensitive to fuel reactivity than others. This is part of different fuel flexibility margins. The reactivity measured as C2+ is integral part of the operational concept. The operation of the gas turbine can be adjusted according to the fuel composition for optimized performance and for safety with respect to flashback and blow out. A fast detection of the fuel composition is a requirement for optimized performance and as a safety measurement. Any detection of a change in composition of the fuel can be used to deduce a change in reactivity, which can be used for optimized gas turbine operation.

To span wider space of fuel parameters one needs to consider either a number of very fuel specific measurements or to measure a wider range of physic-chemical properties in combination with a method to determine the fuel composition.

Currently it is not known to use fuel density or other physico-chemical properties for supporting determination of fuel composition or ratio of different fuel components in a mixture.

### Summary of the Invention

It is an object of the present invention to provide a fast method for controlling a gas turbine by measuring fuel properties to determine safe operation ranges with respect to flashback and blow out.

This object is obtained by a method for controlling a gas turbine, according to claim 1 of the present application.

The method for controlling a gas turbine with at least one combustor stage, operating with an integral fuel reactivity measurement concept, is used for a fast determination of a safe operation range of the gas turbine with respect to flashback and blow-out. The method comprising deducing the fuel composition and therefore the fuel reactivity by combined measurements of (n-1) physico-chemical properties of a fuel mixture with n>1 fuel components, for deriving the concentration of one component for each physico-chemical property of the fuel gas mixture or for determining of a ratio of said fuels with known compositions and adjusting at least one operation parameter of the gas turbine at least partially based on the determined property of the fuel gas mixture entering the combustors.

According to the invention, the method is characterized in that said measurement of the physico-chemical properties is carried out in addition to usual conventional fuel gas measurements, running the gas turbine in a safe mode until the exact fuel gas composition is confirmed by the conventional measurement device with lower response time, but higher accuracy.

Said mentioned adjusting of the gas turbine comprises a de-rating because of a reduction of the hot gas temperature and/or a staging. If the gas turbine is of the sequential combustion type with a first and a second combustor said man, i.e. balancing the power between the first and the second combustor. Said mentioned adjusting may comprise a power balancing between the first and second combustor.

According to an example of the invention the method is characterized in that only one property is measured which property is only part of one fuel gas flow before and after mixing.

According to another embodiment the method is characterized in that one property of a fuel gas is measured after mixing the fuels if the composition of the individual fuels is expected to be nearly constant and known.

Preferably, as physico-chemical property the density of the fuel gas is measured to detect changes of fuel composition and the C2+ content and/or the H₂ content is derived from the density measurement.

In addition, as physico-chemical property the heat conductivity and/or the heat input (Lower heating value, LHV) is measured to detect changes in fuel composition.

According to one example embodiment of the present invention, said determining the composition of the fuel gas via the measured density and heat conductivity of the fuel gas, further comprises: determining one or more fuel properties consisting of percentage of C2+, Wobbe index, relative heat input or specific heat of the fuel gas.

According to one example embodiment of the present invention, said measuring of fuel properties is achieved with a Coriolis meter, an infrared analyser, a gas chromatograph, a RAMAN spectroscopic device and/or a high resolving diode laser.

According to one example embodiment of the present invention, the method further comprises: determining the contents of CH₄, CO, C₂H₆, N₂ and/or CO₂ in the fuel gas.

According to one example embodiment of the present invention, the operation parameter is formed out of the fuel gas composition components.

According to one example embodiment of the present invention, the operation parameter is composed of the fuel gas composition components that are weighted according their impact on the reactivity of the flame.

According to one example embodiment of the present invention, said adjusting at least one operation parameter of the gas turbine at least partially based on the determined density of the fuel gas, comprises: determining a magnitude of the change of the density of the fuel gas; setting the operation parameters of the gas turbine to be a set of pre-determined operation parameters when the magnitude of the change is greater than a pre-determined threshold.

According to one example embodiment of the present invention, said adjusting at least one operation parameter of the gas turbine at least partially based on the determined density of the fuel gas, comprises: for the purpose of keeping the power output of the gas turbine constant, performing at least one adjustment of the following: changing the staging ratio of the fuel supply of individual combustors, and/or changing fuel mass flow among multiple combustors, changing the fuel gas mixture by combining different fuel gases to form a fuel gas with normal flammability values, diluting the fuel gas with an inert, changing the ratio of recirculated exhaust gas, and changing the properties of the working fluid.

According to one example embodiment of the present invention, said adjusting at least one operation parameter of the gas turbine at least partially based on the determined density of the fuel gas, comprises: adjusting a turbine inlet temperature (TIT) of the gas turbine based on the measured fuel gas property, or the mass flow of the working fluid, or the fuel mass flow in order to operate the gas turbine in optimised and safe conditions.

With the technical solution of the present invention, by way of detecting fast changes in fuel gas, it is assured that the gas turbine may operate with varieties of fuel gas under optimized performance and minimized damage thereto. In actual applications, the present invention may improve flexibility of gas turbines and cost effectiveness of operation of the gas turbines.

### Brief Description of the Drawings

The objects, advantages and other features of the present invention will become more apparent upon reading of the following non-restrictive description of preferred embodiments thereof, given for the purpose of exemplification only, with reference to the accompany drawing, in which:
- Fig. 1: shows a schematic view of an example of a gas turbine which may adopt the technical solution of the present invention and
- Fig. 2: shows the density and heat conductivity versus composition mixtures of fuel CH₄/H₂.

### Detailed Description of Different Embodiments of the Invention

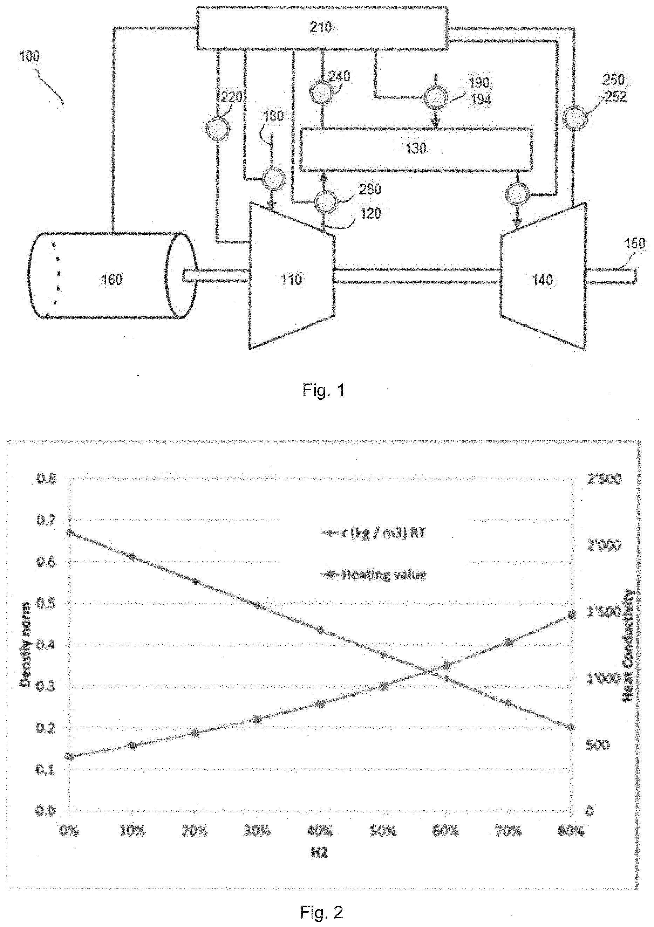

Fig. 1 shows a schematic view of an example of a gas turbine 100 which may adopt the method as proposed herein. The gas turbine 100 mainly comprises a compressor 110 which compresses an incoming flow of the working fluid 180, such as air, and delivers the compressed flow of air 120 into a combustor 130, where the compressed flow of air 120 is mixed with a flow of fuel gas 190 to compose a combustible mixture. The combustible mixture may be ignited to form a flow of combustion gas 140 which is delivered to a turbine 140 and drive the turbine 140 to produce mechanical work. The mechanical work produced in the turbine 140 drives the compressor 110 and an external load, such as a generator 160 via a rotor 150.

It should be noticed that only one combustor 130, which is preferable of the applicant's premix EV or AEV type is shown here for simplicity and clarity. According to the invention the method may refer to a gas turbine with sequential combustion and with two combustors 130 (SEV type). Other components and/or other configurations may also be used herein. It should be noticed that only one gas turbine 100 is shown here for simplicity and clarity. Those skilled in the art will understand that multiple gas turbines 100, other type of gas turbines may be used here together in order to adapt to different applications, in which case these gas turbines may be known as a gas turbine group.

The gas turbine 100 may use a variety of fuels, such a natural gas, various types of syngas, and other types of fuel gases. Performance of the gas turbine 100 is sensitive to the properties of the fuel gas entering the combustor 130. Generally, the properties of the fuel gas that are correlated closely with performance of a gas turbine include, but not limited to, molecular weight, specific gravity, flow rate, density, mixing property and chemical reactivity, etc. Uncompensated variety in fuel gas properties may lead to combustion instability (dynamics), emission increase in terms of NOₓ and CO, reduced operational margins and deterioration of pulsation behavior. In extreme cases, the gas turbine may be damaged due to dramatically changed fuel gas properties, such as overheating arisen for sudden excess heat content of the supplied fuel gas. In view of protecting the gas turbine 100 from damage, and further improving performance thereof, operation parameters of the gas turbine 100 may be adjusted based upon fuel gas properties.

In the present invention the fuel composition is needed not mainly to determine the hot gas temperatures or performance of the engine, but to derive their reactivity and to determine safe operation ranges with respect to flashback and blow out.

Returning now to Fig.1, overall operation of the gas turbine 100 is controlled by a controller 210, wherein different distributed control modules arranged around the gas turbine 100 may be in communication with the controller 210. In one typical implementations of the present invention, a fuel gas control module 190 disposed in the supply path of fuel gas may communicate with the controller 210. The fuel gas control module 190 may comprises sensors 194, such as a Coriolis meter, an infrared analyzer, a gas chromatograph, a RAMAN spectroscopy, a Wobbe meter or a high resolving diode laser, etc., which may be used to obtain fuel gas related properties, such as, mass flow rate, temperature, pressure, density, heat conductivity, percentage of C2+(refer to carbon in the alkane other than the methane), Wobbe Index, relative heat input, etc.

The controller 210 may comprise many other control modules that communicate with other portions of the gas turbine, such as, for example, an air control module 280 disposed in the supply path of air 120 entering the combustor 130 to provide air related properties and control thereto, a combustion control module 240 connected with the combustor 130 to provide combustion related properties and control thereto, a turbine control module 250 connected with the turbine 140 to provide turbine related properties and control thereto, a compressor control module 220 connected with the compressor 110 to provide compressor related properties and control thereto.

All of these control modules may comprise respective sensors to detect variety of properties. For example, the turbine control module 250 may comprise a sensor 252, which is used to detect and adjust a turbine inlet temperature (TIT).

It should be noted that the above mentioned control modules represent only examples for explaining principles of the present invention. In order to detect properties related to the operation of the gas turbine and provide control to the operation of the gas turbine, those skilled in the art may adopt any control modules at any appropriate positions around the gas turbine, all of which definitely fall into the scope of the present invention. For example, other than the above mentioned control modules, the gas turbine may comprise control modules for controlling and/or adjusting and/or changing staging ratio of the fuel supply of individual combustors when applied in multiple combustors, for controlling and/or adjusting and/or changing fuel mass flow among multiple combustors, for controlling and/or adjusting and/or changing the fuel gas mixture, for controlling and/or adjusting and/or changing diluting of the fuel gas with an inert, for controlling and/or adjusting and/or changing the ratio of recirculated exhaust gas, and/or for controlling and/or adjusting and/or changing the properties of the working fluid, such as inlet cooling, water or steam injection.

In one example embodiment of present invention, it is proposed to control a gas turbine or a gas turbine group by a method, which comprises: determining a density of a fuel gas entering a combustor 130 of the gas turbine 100; adjusting at least one operation parameter of the gas turbine 100 at least partially based on the determined density of the fuel gas. The method will be further explained by way of non-limited examples.

In one example implementation, the density of the fuel gas entering the combustor 130 may be selected to control the operation of the gas turbine 100 in order to have optimized performance. In one embodiment, the density of the fuel gas may be obtained through sensors 194 disposed in the fuel gas supply path. Sensors 194 may comprise Coriolis meters, which may detect quickly mass flow and density of the fuel gas. It is advantageous to use Coriolis meter to obtain the density of the fuel gas since the Coriolis meter is generally configured in a gas turbine which makes the implementation of the present invention cost effective without additional equipment purchasing and installation. Furthermore, the Coriolis meter may give density readings of the fuel gas very fast that enable immediate response to adjust the operation parameters of a gas turbine avoiding damage thereto when sudden change in fuel gas occurs. For example, in a typical configuration of the gas turbine, the density of the fuel gas deduced from Coriolis meter readings may indicate within <1 min that the combustor 130 is supplied with a different fuel gas which is stabilized after 3-4min. The same times are also realized by using the Infrared Analyzer, while the Gas Chromatography exhibits a longer delay (>15min). Those skilled in the art will understand that, for precise measurement of norm density, the temperature and pressure of the fuel gas should be known, which may also obtained by appropriate sensors in the fuel gas control module 190.

It is known in the field that fuel gas composition has strong influence on the performance of a gas turbine. Thus, a fast response addressing fast changing in fuel gas composition is explored through density variations or measurements of the fuel gas in the present invention. Generally, an infrared analyzer is adopted to measure CH₄ and C2+ contents in the fuel gas This is a fast way to obtain these properties. However, H₂ and N₂ are not possible to be accurately measured using the Infrared Analyzer. In this case, the present invention proposes to deduce the H₂ and/or N₂ content based on the density and heat conductivity of the fuel gas, for which detailed deduction per se is known to those skilled in the art.

Generally, different types of fuel gases with certain mixture fractions may have different densities which are known to the gas turbine control system. In this case, as one non-limiting implementation, density measurement may be used to identify the type of the fuel gas entering the combustor of the gas turbine, hence the specific composition of the fuel gas. As the composition of the fuel gas is determined through density measurement, one or more operation parameters of the gas turbine may be adjusted accordingly.

In one embodiment, other than the Coriolis meter, the sensors 194 in the fuel gas control module 190 may comprise additional sensors measuring heat conductivity of the fuel gas, together with which the composition of the fuel gas, in particular, H₂ and/or N₂ contents may be deduced so as to be used to control the operation of the gas turbine 100. In the method aspect, the present invention may comprise a step of measuring the heat conductivity of the fuel gas. In a further aspect, the present invention may comprise a step of determining the composition of the fuel gas via the determined density and heat conductivity of the fuel gas.

In another example embodiment of the present invention, the density of the fuel gas may be combined with other properties of the fuel gas than and/or including the heat conductivity to obtain or deduce other components of the fuel gas with the aim to conclude the composition of the fuel gas, in which case the present invention may comprise a step of determining one or more fuel gas properties consisting of the percentage of C2+, Wobbe index, relative heat input or specific heat of the fuel gas.

In an example implementation, the above mentioned fuel gas properties may be measured with respective specific sensors that are utilized as sensors 194 in the fuel gas control module 190. For example, the above specific sensors may comprise a Gas Chromatography, a RAMAN spectroscopy, a high resolving diode laser, etc., just to name a few. With the above properties of the fuel gas, the composition of the fuel gas may be determined by methods known to those skills in the art. In the method aspect, the present invention may comprise the step of determining the contents of H₂, CO₂, N₂, CH₄, C₂H₆, and the like in the fuel gas.

According to the present invention, with an appropriate combinations of properties of the fuel gas that are measured with respective sensors, it is possible to achieve a fast detection of the composition of the fuel gas, hence an immediate response addressing fast change in fuel gas by adjusting operation parameters of the gas turbine avoiding damage thereto.

As a non-limited example in the present invention, the operation parameters of the gas turbine or gas turbine group may comprise the staging ratio of the fuel supply of an individual combustor, fuel mass flow among multiple combustors (e.g. reheat gas turbine), fuel gas mixture, ratio of recirculated exhaust gas and properties of the working fluid (e.g. inlet cooling, water or steam injection).

In one embodiment of the present invention, in order to keep the power output of the gas turbine constant, at least partially based on the determined density of the fuel gas, a variety of adjustment may be adopted, including: changing the staging ratio of the fuel gas supply of individual combustors, changing the fuel mass flow among multiple combustors (e.g., reheat gas turbine), changing the fuel gas mixture by combining different fuel gases to form a composite fuel gas with normal flammability values, diluting the fuel gas with an inert component (e.g., steam, N₂, CO₂ or others), changing the ratio of recirculated exhaust gas, and changing the properties of the working fluid, such as inlet cooling, water or steam injection.

In another embodiment of the present invention, in order to operate the gas turbine in optimised and safe conditions, at least partially based on the determined density of the fuel gas, a variety of adjustment may be adopted, including: adjusting a turbine inlet temperature (TIT) of the gas turbine, adjusting the mass flow of the working fluid, and/or adjusting the fuel mass flow.

In one example implementation with respect to the composition or density related properties of the fuel gas, it is proposed to set a value range defined by a lower limit and an upper limit for the respective components or the density of the fuel gas. In this case, the method of the present invention may comprise a step of determining the divergence of the value for pre-selected components, such as H₂, or for the density of the fuel gas. For example, determining the content of H₂ as lower than the lower limit or higher than the upper limit. After this, a further step that different adjustment is effected according to the result of the determination is included in the method according to the present invention.

In another embodiment of the present invention, the operation parameter of the gas turbine or gas turbine group may be formed out of respective components of the fuel gas, such as H₂, CH₄, C2+, or any combination thereof.

In another alternative embodiment of the present invention, the operation parameter of the gas turbine or gas turbine group may be composed of the fuel gas composition components that are weighted according their impact on the reactivity of the flame, wherein the fuel gas composition components may comprise CH₄, CO, CO₂, C2+, H₂ and/or N₂.

In another example aspect, the operation parameters of the gas turbine or gas turbine group may be adjusted in place of or in addition to determining the composition or density of the fuel gas. In an example embodiment of the present invention, the method may comprise, in particular, in the step of adjusting at least one operation parameter of the gas turbine at least partially based on the density of the fuel gas: determining a magnitude of change of the density of the fuel gas; setting the operation parameters of the gas turbine to be a set of pre-determined operation parameters when the magnitude of change is greater than a pre-determined threshold. In this case, the set of pre-determined operation parameters may be called a "safe mode" of operation, which may adopt conservative parameters critical to the operation of the gas turbine or gas turbine group so as to avoid damage thereto. According to this example aspect, when sudden change in the fuel gas occurs, it is possible to switch the gas turbine to the "safe mode" of operation to prevent damage even without having the precise composition. When the Coriolis meter is adopted to measure the density of the fuel gas, it is very fast to know the density of the fuel gas hence the magnitude of change of the density even without knowing the composition of the fuel gas. Thus, the present invention provides a safeguard measure without additional device. This safeguard measure responds fast to a fuel gas change, so as to improve gas turbine protection against damage due to unsuitable fuel gas.

In a further embodiment of the present invention, the method may integrate the steps of determining the composition and the setting to "safe mode" of operation. In this case, the step of setting to "safe mode" of operation may be effected before the step of determining the composition of the fuel gas for instant protection for the gas turbine and gas turbine group, considering composition determination may take more time to get reliable and accurate conclusion. After the composition of the fuel gas is determined, the operation parameters in connection with the composition may be further adjusted taking account of the influence from the changing components in the fuel gas composition, in order to make the gas turbine or gas turbine group continually operate under optimized performance.

A further example refers to a gas turbine with two natural gas suppliers. They provide a relative constant gas composition, but the C2+ contents differ from each other. It is known state of the art to use an additional device for a fast measurement of the C2+ concentration of the natural gas in the plant, but this device is not standard and has to be installed additionally for this purpose. As an alternative, according to the present invention it is possible by the measurement of one physico-chemical property of the gas mixture according to the knowledge of only one property, for example the density, to deduce the ratio of the two gases resp. the composition of the mixture and the gas turbine can be operated accordingly (de-rating or staging based on the fuel reactivity or the H₂, C2+ content).

An additional example refers to a hydrogen reservoir in a natural gas line with a known, relative constant natural gas composition. In case the hydrogen content is more than 5 vol. % it is necessary to operate the gas turbine with for example a single combustions stage accordingly that means de-rating or staging. If the gas turbine works with sequential combustion a power balancing between the first and the second combustor is done. In case of density or heat conductivity measurements it is referred to Fig. 2, which shows an example for a mixture of CH₄ and H₂. (the density and heat conductivity versus composition mixtures of fuel CH₄/H₂). But this could also be applied to a mixture of a known natural gas and H₂. Based on the density measurement or heat conductivity it is possible to deduce the H₂ concentration and the gas turbine can be adjusted accordingly in a very fast way and thereby operating the gas turbine in a safe range.

Also in case of a local hydrogen reservoir it has to be ensured the H₂ concentration of the fuel gas is known. On one hand, it is possible to measure the admixed H₂ amount directly (a very exact measurement is necessary) or it is possible to use the method according to the present application for determining the determining the H₂ concentration directly out of the mixture which is faster and cheaper.

Further the determination of a ratio of two or more known fuels, fuel types from different fuel gas suppliers, is possible by measuring a single (number of fuel types minus one) physico-chemical property.

For fuel doping for example with H₂ on site or at the natural gas grid, the gas chromatograph, which is usually installed at a gas turbine power plant or at the fuel gas supplier next to the power plant can be used to measure the gas composition of the main gas / natural gas. Only one physic-chemical property is required to detect sudden changes of the doping-species / doping-mixture. The operation of the gas turbine can be adapted accordingly. The fuel composition is needed not mainly to determine the hot gas temperatures or performance of the engine but to derive their reactivity and to determine safe operation ranges with respect to flashback and blow out.

### To summarize :

The following physico-chemical properties for determination of the fuel gas components could be used:
- The use of density measurements from Coriolis meter to derive one additional component in the fuel gas, e.g. H₂ at which the existence is known but the cocentration is unknown.additional component in the fuel gas, e.g. H₂, at which the existence is known but the concentration is unkown. C2+ or H₂ content could be derived very quickly. The density measurement is very fast and can be used in connection with other measurements (C2+ content by IR absorption detector, heat capacity or others) to detect fast changes of fuel composition.
- Using the density fast changes in fuel composition can be detected. From that e.g. the H₂ content can be deduced only if the number of possible components is limited. The density change with H₂ is particularly large compared to i.e. the main component of natural gas (ρ (CH₄)/ ρ (H₂): 16/2. If more components are possible at that particular site further measurements might be required to derive a fast analysis of the composition. Even without the exact composition the GT can be switched to a safe operation mode when a sudden change composition is detected by the density change.
- Heat conductivity measurement can be done easily and fast and can also be included into the evaluation scheme if more than one free parameter for the composition are required.
- Wobbe index meters - If required another measurement device can be combined.
- Detecting the relative heat input by gas turbine parameters: By keeping the engine load, the mass flow of the fuel has to be changed by change of lower heating value (LHV) of the fuel, Therefore the required fuel mass flow is an indicator of the LHV, which can also be used as physic-chemical property for deducing the fuel composition and therefore the fuel reactivity.
- IR detectors measuring C2+ composition: This is already state of the art. But in combination with other measurements this can include a new fuel species.
- RAMAN spectrometers: This is a more sophisticated (and expensive) technology capturing all components simultaneously.

For example with the right combination of this measurements it is possible to construct fast detector for fuel gas composition that enables to detect CH₄, C2+, (from IR absorption) H₂ and N₂ (from simultaneously density and measured heat conductivity). The implementation of the invention includes the adaption of the control software to derive a fast measurement from the detector signals and to evaluate a possible change of the engine operation for example a change in fuel staging or a de-rating of the first combustor (EV) of a GT24/GT26 reheat engine and a simultaneous increase of sequential combustor fuel-

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

### List of Reference Numerals

- 100: gas turbine
- 120: compressed flow of air
- 130: combustor
- 140: turbine
- 150: rotor
- 160: generator
- 180: incoming flow of air
- 190: fuel gas control module
- 194: sensors
- 210: controller
- 220: compressor control module
- 240: combustion control module
- 250: turbine control module
- 252: sensor
- 280: air control module

## Claims

1. A method for controlling a gas turbine with at least one combustor stage, operating with an integral fuel reactivity measurement concept, to fast determine a safe operation range of the gas turbine with respect to flashback and blow-out, the method comprising deducing the fuel gas composition and therefore the fuel reactivity by combined measurements of (n-1) physico-chemical properties of a fuel gas mixture with n>1 fuel components, for deriving the concentration of one component for each physico-chemical property of the fuel gas mixture or for determining of a ratio of said fuels with known compositions and adjusting at least one operation parameter of the gas turbine at least partially based on the determined property of the fuel gas mixture entering the combustor; the method being **characterized in that** said measurement of the physico-chemical properties is carried out in addition to usual conventional fuel gas measurements, running the gas turbine in a safe mode until the exact fuel gas composition is confirmed by the conventional measurement device with lower response time, but higher accuracy.

2. The method according to claim 1, **characterized in that** said adjusting of the gas turbine comprises a de-rating because of a reduction of the hot gas temperature and/or a staging.

3. The method according to claim 1, **characterized in that** the gas turbine is of the sequential combustion type with a first and a second combustor and said adjusting of the gas turbine comprises a power balancing between the first and the second combustor.

4. The method according to claim 1, **characterized in that** only one property is measured which property is only part of one fuel gas flow before and after mixing.

5. The method according to claim 1, **characterized in that** one property of a fuel gas is measured after mixing the fuels if the composition of the individual fuels is known and expected to be nearly constant.

6. The method according to one of claim1 to claim 5, **characterized in that** as physico-chemical property the density of the fuel gas is measured to detect changes of fuel composition.

7. The method according to claim 6, **characterized in that** the C2+ content and/or the H₂ content is derived from the density measurement.

8. The method according to one of claim 1 to claim 7, **characterized in that** as physico-chemical property the heat conductivity is measured to detect changes in fuel compositions.

9. The method according to one of claim 1 to claim 8, **characterized in that** as physico-chemical property the heat input (Lower heating value, LHV) is measured to detect changes in fuel composition.

10. The method according to one of claim 1 to claim 9, **characterized in that** said measuring is done with a Coriolis meter, an Infrared (IR) Analyser, a Gas Chromatograph (GC), a RAMAN spectroscopy and/or a high resolving diode laser.

11. The method according one of claim 1 to claim 10, **characterized in that** the method further comprises determining the contents of CH₄, CO, C₂H₆, N₂ and/or CO₂ in the fuel gas.

12. The method according to one of claim 1 to claim 11, characterized that the operation parameter is formed out of the fuel gas composition components.

13. The method according to claim 12, characterized that the fuel gas composition components are weighted according their impact on the reactivity of the flame.

14. The method according to one of claim 1 to claim 13, **characterized in that** said adjusting at least one operation parameter of the gas turbine at least partially based on the determined density of the fuel gas, comprises determining a magnitude of the change of the density of the fuel gas and setting the operation parameters of the gas turbine to be a set of pre-determined operation parameters when the magnitude of the change is greater than a pre-determined threshold.

15. The method according to one of claim 1 to claim 14, **characterized in that** said adjusting at least one operation parameter of the gas turbine at least partially based on the determined density of the fuel gas, comprises adjusting a turbine inlet temperature (TIT) of the gas turbine based on the determined density of the fuel gas, or the mass flow of the working fluid, or the fuel mass flow in order to operate the gas turbine in optimised and safe conditions.

## Patentansprüche

1. Verfahren zur Steuerung einer Gasturbine mit mindestens einer Brennstufe, welche mit einem integrierten Brennstoffreaktivitäts-Messkonzept arbeitet, zur schnellen Bestimmung eines sicheren Betriebsbereichs der Gasturbine in Bezug auf Flammenrückschlag und Verlöschen, wobei das Verfahren die Herleitung der Brenngaszusammensetzung und somit der Brennstoffreaktivität mittels kombinierter Messungen von (n-1) physikalisch-chemischen Eigenschaften eines Brenngasgemischs mit n>1 Brennstoffbestandteilen umfasst, zur Ableitung der Konzentration eines Bestandteils für jede physikalisch-chemische Eigenschaft des Brenngasgemischs oder zur Bestimmung eines Verhältnisses der Brennstoffe mit bekannten Zusammensetzungen und Einstellung mindestens eines Betriebsparameters der Gasturbine, der mindestens teilweise auf der ermittelten Eigenschaft des dem Brenner zugeführten Brenngasgemischs basiert; wobei das Verfahren **dadurch gekennzeichnet ist, dass** die Messung der physikalisch-chemischen Eigenschaften zusätzlich zu den gewöhnlichen, herkömmlichen Brenngasmessungen durchgeführt wird, wobei die Gasturbine in einem sicheren Modus betrieben wird, bis die exakte Brenngaszusammensetzung von dem herkömmlichen Messgerät mit geringerer Reaktionszeit, aber höherer Genauigkeit bestätigt worden ist.

2. Verfahren nach Anspruch 1, **dadurch gekennzeichnet, dass** die Einstellung der Gasturbine wegen der Verringerung der Heißgastemperatur eine Lastminderung umfasst oder ein Staging.

3. Verfahren nach Anspruch 1, **dadurch gekennzeichnet, dass** es sich um eine Gasturbine mit sequentieller Verbrennung mit einem ersten und einem zweiten Brenner handelt und dass die Einstellung der Gasturbine einen Leistungsausgleich zwischen dem ersten und dem zweiten Brenner umfasst.

4. Verfahren nach Anspruch 1, **dadurch gekennzeichnet, dass** nur eine Eigenschaft gemessen wird, die nur einen Teil eines Brenngasstromes vor und nach dem Mischen ausmacht.

5. Verfahren nach Anspruch 1, **dadurch gekennzeichnet, dass** eine Eigenschaft eines Brenngases nach dem Mischen der Brennstoffe gemessen wird, wenn die Zusammensetzung der einzelnen Brennstoffe bekannt und voraussichtlich nahezu konstant ist.

6. Verfahren nach einem der Ansprüche 1 bis 5, **dadurch gekennzeichnet, dass** als physikalisch-chemische Eigenschaft die Dichte des Brenngases gemessen wird, um Veränderungen der Brennstoffzusammensetzung zu erkennen.

7. Verfahren nach Anspruch 6, **dadurch gekennzeichnet, dass** aus der Dichtemessung der (C2+)-Gehalt und/oder der H₂-Gehalt abgeleitet wird.

8. Verfahren nach einem der Ansprüche 1 bis 7, **dadurch gekennzeichnet, dass** als physikalisch-chemische Eigenschaft die Wärmeleitfähigkeit gemessen wird, um Veränderungen der Brennstoffzusammensetzung zu erkennen.

9. Verfahren nach einem der Ansprüche 1 bis 8, **dadurch gekennzeichnet, dass** als physikalisch-chemische Eigenschaft der Wärmeeintrag (untere Heizwert, LHV) gemessen wird, um Veränderungen der Brennstoffzusammensetzung zu erkennen.

10. Verfahren nach einem der Ansprüche 1 bis 9, **dadurch gekennzeichnet, dass** die Messung mit einem Coriolis-Messgerät, einem Infrarot-(IR)-Analysator, einem Gaschromatographen, mittels RAMAN-Spektroskopie und/oder mit einem hochauflösenden Diodenlaser durchgeführt wird.

11. Verfahren nach einem der Ansprüche 1 bis 10, **dadurch gekennzeichnet, dass** das Verfahren zudem die Bestimmung des CH₄-, CO-, C₂H₆, N₂ und/oder CO₂-Gehalts in dem Brenngas umfasst.

12. Verfahren nach einem der Ansprüche 1 bis 11, **dadurch gekennzeichnet, dass** der Betriebsparameter anhand der Komponenten der Brenngaszusammensetzung gebildet wird.

13. Verfahren nach Anspruch 12, **dadurch gekennzeichnet, dass** die Komponenten der Brenngaszusammensetzung entsprechend ihrer Auswirkung auf die Reaktivität der Flamme gewichtet werden.

14. Verfahren nach einem der Ansprüche 1 bis 13, **dadurch gekennzeichnet, dass** die Einstellung mindestens eines Betriebsparameters der Gasturbine, der mindestens teilweise auf der ermittelten Dichte des Brenngases basiert, die Bestimmung der Größenordnung der Änderung der Dichte des Brenngases und die Einstellung der Betriebsparameter der Gasturbine auf vorgegebene Betriebsparameter umfasst, wenn die Größenordnung der Änderung größer ist als ein vorgegebener Schwellenwert.

15. Verfahren nach einem der Ansprüche 1 bis 14, **dadurch gekennzeichnet, dass** die Einstellung mindestens eines Betriebsparameters der Gasturbine, der mindestens teilweise auf der ermittelten Dichte des Brenngases basiert, die Einstellung einer Turbineneintrittstemperatur (TIL) der Gasturbine auf der Basis der ermittelten Dichte des Brenngases, des Massenstroms des Arbeitsfluids oder des Brennstoffmassenstroms umfasst, um die Gasturbine unter optimierten und sicheren Bedingungen zu betreiben.

## Revendications

1. Procédé destiné à commander une turbine à gaz qui présente au moins un étage de chambre de combustion, fonctionnant avec un concept intégré de mesure de la réactivité du combustible, destiné à déterminer rapidement une plage de fonctionnement sûr de la turbine à gaz en ce qui concerne un retour de flamme et un éclatement, le procédé comprenant les étapes consistant à déduire la composition du gaz combustible et par conséquent la réactivité du combustible par des mesures combinées de (n - 1) propriétés physico-chimiques d'un mélange de gaz combustibles qui présentent n > 1 composants de combustible, à obtenir la concentration d'un composant pour chaque propriété physico-chimique du mélange de gaz combustible, ou à déterminer un rapport desdits combustibles qui présentent des compositions connues, et régler au moins un paramètre opérationnel de la turbine à gaz en partie au moins sur la base de la propriété déterminée du mélange de gaz combustible qui pénètre dans la chambre de combustion ; le procédé étant **caractérisé en ce que** ladite mesure des propriétés physico-chimiques est exécutée en plus des mesures conventionnelles habituelles de gaz combustible, en faisant fonctionner la turbine à gaz dans un mode sûr jusqu'à ce que la composition exacte du gaz combustible soit confirmée par le dispositif de mesure conventionnel avec un temps de réponse plus faible, mais avec une précision plus élevée.

2. Procédé selon la revendication 1, **caractérisé en ce que** ladite étape consistant à régler la turbine à gaz, comprend une étape de délestage en raison d'une réduction de la température des gaz chauds, et / ou d'étagement.

3. Procédé selon la revendication 1, **caractérisé en ce que** la turbine à gaz est du type à combustion séquentielle avec des première et deuxième chambres de combustion, et ladite étape consistant à régler la turbine à gaz comprend un équilibrage de la puissance entre les première et deuxième chambres de combustion.

4. Procédé selon la revendication 1, **caractérisé en ce qu'**une seule propriété est mesurée, laquelle propriété est seulement une partie d'un flux de gaz combustible avant et après le mélange.

5. Procédé selon la revendication 1, **caractérisé en ce qu'**une propriété d'un gaz combustible est mesurée après le mélange des combustibles si la composition des combustibles individuels est connue, et si l'on s'attend à ce qu'elle soit presque constante.

6. Procédé selon l'une quelconque des revendications 1 à 5, **caractérisé en ce que** la densité du gaz combustible, en tant que propriété physico-chimique, est mesurée de façon à détecter des modifications de la composition du combustible.

7. Procédé selon la revendication 6, **caractérisé en ce que** la teneur en C₂₊ et / ou la teneur en H₂ sont obtenues à partir de la mesure de la densité.

8. Procédé selon l'une quelconque des revendications 1 à 7, **caractérisé en ce que** la conductivité thermique, en tant que propriété physico-chimique, est mesurée de façon à détecter des modifications des compositions du combustible.

9. Procédé selon l'une quelconque des revendications 1 à 8, **caractérisé en ce que** l'apport de chaleur (valeur calorifique minimale, LHV), en tant que propriété physico-chimique, est mesurée de façon à détecter des modifications de la composition du combustible.

10. Procédé selon l'une quelconque des revendications 1 à 9, **caractérisé en ce que** ladite mesure est exécutée avec un appareil de mesure à effet Coriolis, un analyseur infrarouge (IR), un chromatographe en phase gazeuse (GC), une spectroscopie de RAMAN, et / ou une diode laser à résolution élevée.

11. Procédé selon l'une quelconque des revendications 1 à 10, **caractérisé en ce que** le procédé comprend en outre une étape consistant à déterminer les teneurs en CH₄, CO, C₂H₆, N₂, et / ou en CO₂, dans le gaz combustible.

12. Procédé selon l'une quelconque des revendications 1 à 11, **caractérisé en ce que** le paramètre opérationnel est formé à partir des composants de la composition du gaz combustible.

13. Procédé selon la revendication 12, **caractérisé en ce que** les composants de la composition du gaz combustible, sont pondérés selon leur impact sur la réactivité de la flamme.

14. Procédé selon l'une quelconque des revendications 1 à 13, **caractérisé en ce que** ladite étape consistant à régler au moins un paramètre opérationnel de la turbine à gaz en partie au moins sur la base de la densité déterminée du gaz combustible, comprend les étapes consistant à déterminer une grandeur de la modification de la densité du gaz combustible, et à régler les paramètres opérationnels de la turbine à gaz de façon à ce qu'ils représentent un ensemble de paramètres opérationnels prédéterminés, lorsque la grandeur de la modification est supérieure à un seuil prédéterminé.

15. Procédé selon l'une quelconque des revendications 1 à 14, **caractérisé en ce que** ladite étape consistant à régler au moins un paramètre opérationnel de la turbine à gaz en partie au moins sur la base de la densité déterminée du gaz combustible, comprend une étape consistant à régler une température d'entrée de turbine (TIT) de la turbine à gaz sur la base de la densité déterminée du gaz combustible, ou le débit massique du fluide de travail, ou le débit massique du combustible, de façon à faire fonctionner la turbine à gaz dans des conditions optimisées et sûres.
